# DEMANDE DE BREVET EUROPEEN

(11) **EP 2 077 500 A1**
(43) Date de publication de la demande: **08.07.2009**
(21) Numéro de dépôt: 08291160.3
(22) Date de dépôt: 10.12.2008
(51) Int. Cl.: G06F 11/20

(54) **Système informatique à haute disponibilité**

(30) Priorité: 28.12.2007 FR 0709167
(71) Demandeur: Bull S.A.S., 78340 Les Clayes sous Bois (FR)
(72) Inventeur: Martinez, Patrice, 38100 Grenoble (FR)

(57) **Abrégé**

Un système informatique comprend un premier (1) ordinateur et un second (3), reliés entre eux par des moyens de communications (5). Le second ordinateur (3) comprend des moyens de redémarrage qui peuvent être actionnés en réponse à un signal de commande transmis grâce aux moyens de communication (5). Le premier ordinateur (1) comprend un dispositif de secours, qui intègre un premier module, agencé de manière à émettre répétitivement un signal de commande de redémarrage pour le second ordinateur (3). Le second ordinateur (3) constitue ainsi un ordinateur de secours, qui démarre en cas de dysfonctionnement du premier ordinateur (1).

## Description

L'invention a trait aux systèmes informatiques, et plus particulièrement aux systèmes informatiques comprenant plusieurs ordinateurs, reliés entre eux par des moyens de communications, tels que, par exemple, des réseaux de type Ethernet. L'invention concerne également un procédé d'interaction entre au moins deux ordinateurs.

Il existe de très nombreux systèmes de ce type, d'architectures et de fonctions extrêmement variées.

On s'intéresse ici aux systèmes informatiques assurant des fonctions d'une importance telle, qu'un niveau de fiabilité minimum du système doit être garanti.

L'invention trouve un intérêt tout particulier dans les grappes de serveurs, souvent désignées par le terme anglais de "cluster", dans lesquelles plusieurs ordinateurs sont regroupés pour permettre une gestion globale de ces ordinateurs et/ou pour additionner les capacités de travail individuelles des ordinateurs.

La capacité de travail du système dépend en grande partie du nombre d'ordinateurs en fonctionnement, en sorte que la défaillance de l'un de ces ordinateurs provoque une baisse des performances globales du système. Cette baisse de la capacité de travail peut avoir de graves conséquences, telles qu'un blocage du système, des ralentissements dans le traitement de données ou encore une incapacité à effectuer des tâches dévolues au système.

L'invention ne se limite ni aux systèmes composés de nombreux ordinateurs, ni aux grappes de serveurs.

Un ordinateur unique, dont la fonction est suffisamment importante pour qu'une défaillance, même temporaire, soit jugée intolérable constitue également un système informatique dont la fiabilité doit être garantie.

Par exemple, la défaillance d'un ordinateur assurant seul la fonction de serveur Web pour un site Internet provoque l'indisponibilité de ce site sur la toile, ce qui peut être, dans certaines conditions, considéré comme inadmissible.

Lorsque la défaillance d'un ordinateur est critique, en particulier pour le fonctionnement d'un système informatique dans son ensemble, il est préférable de prévoir des moyens particuliers destinés à pallier une telle défaillance.

Les systèmes informatiques intégrant de tels moyens peuvent être qualifiés de "systèmes à haute disponibilité".

La Société REDHAT (nom commercial déposé) a développé un ensemble logiciel, appelé "Cluster Suite", destiné à la surveillance de systèmes informatiques vis-à-vis de défaillances des ordinateurs qui le composent.

Cette "Cluster Suite" est basée sur la surveillance d'un ordinateur, ou noeud, qualifié de principal par un ordinateur, ou noeud, de secours. Un tel fonctionnement est dit "actif/passif".

Une partie de l'ensemble logiciel fonctionne sur l'ordinateur principal pour indiquer que celui-ci fonctionne correctement, tandis qu'une autre partie fonctionne sur l'ordinateur de secours pour surveiller en permanence l'ordinateur principal.

Un tel fonctionnement implique le partage d'un espace de stockage entre l'ordinateur principal et l'ordinateur de secours, en général sous la forme d'une baie, comprenant les applications et les données nécessaires à l'exploitation de l'ordinateur principal, ainsi qu'une partie de son système d'exploitation. Il est en effet important que l'ordinateur principal et l'ordinateur de secours forment un ensemble fonctionnel pour le reste du cluster en fonctionnement normal, et capable, en outre, de fonctionner en dépit du dysfonctionnement de l'ordinateur principal. Ceci nécessite une configuration complexe du cluster ou du réseau, laquelle est généralement réalisée de manière manuelle, par exemple en écrivant une pluralité de scripts, pour l'ensemble des ordinateur composant le réseau ou le cluster.

De manière similaire, ce type de solution nécessite que l'ordinateur principal et l'ordinateur de secours partagent une même adresse sur le réseau, ou "adresse IP", toujours de manière à être comme un ensemble fonctionnel par le réseau et à continuer de fonctionner en cas de défaillance de l'ordinateur principal. Il en découle, là aussi, une configuration complexe, impliquant la création d'adresses réseau virtuelles et la gestion de la transition entre l'ordinateur principal et de secours.

En outre, la fiabilité du système dans son ensemble est fortement liée à la fiabilité du logiciel de surveillance. Autrement dit, tout dysfonctionnement ou mauvaise configuration dudit logiciel entame la fiabilité du système. Et ce risque est augmenté par la complexité de cette configuration.

De plus, les procédures de démarrage et d'arrêt des services du système d'exploitation doivent être largement modifiées par rapport aux procédures standard, ce qui entraîne un travail de configuration important et un risque de dysfonctionnement plus élevé.

De très nombreux tests doivent enfin être effectués pour vérifier que tous les cas d'anomalies possibles ont bien été envisagés et correctement traités par le logiciel de surveillance. Sans cela, le système de surveillance lui-même peut devenir la principale cause de panne, ce qui est inacceptable pour un système à haute disponibilité.

Le fait qu'un second ordinateur doive en permanence fonctionner, sans défaillance, constitue encore un inconvénient.

La Demanderesse s'est fixé pour objectif d'améliorer la situation en proposant un système informatique du type comprenant au moins un premier et un second ordinateur, reliés entre eux par des moyens de communications, le second ordinateur comprenant des moyens de redémarrage, pouvant être actionnés en réponse à un signal de commande transmis grâce auxdits moyens de communication, dans lequel le premier ordinateur comprend un dispositif de secours, comprenant au moins un premier module, agencé de manière à émettre répétitivement un signal de commande de redémarrage pour le second ordinateur.

On obtient ainsi un système à haute disponibilité, particulièrement simple à mettre en oeuvre, et bon marché. À un instant donné, un seul des premier et second ordinateurs est en fonctionnement. Il en découle une configuration assez simple de réseaux ou de clusters incorporant ces ordinateurs. Il n'est pas nécessaire de gérer la cohabitation entre deux ordinateurs qui doivent être fonctionnellement identiques au sein du réseau ou du cluster.

Selon l'invention, on propose également un procédé d'interaction entre au moins un premier et un second ordinateur, le procédé comprenant les étapes de démarrage du premier ordinateur, d'émission répétitive par le premier ordinateur de signaux de commande de redémarrage pour le second ordinateur et le redémarrage du second ordinateur en réponse à chacun des signaux de commande de redémarrage.

D'autres caractéristiques et avantages de l'invention apparaîtront à l'examen de la description détaillée ci-après, et des dessins annexés sur lesquels :
- la figure 1 représente schématiquement un système informatique selon l'invention,
- la figure 2 représente schématiquement la structure d'un second ordinateur pour le système informatique de la figure 1,
- la figure 3 est analogue à la figure 2 pour un premier ordinateur,
- la figure 4 représente schématiquement le contenu d'un support de stockage de données pour le premier ordinateur du système de la figure 1, et
- la figure 5 est un ordinogramme illustrant le fonctionnement d'un dispositif de secours pour le premier ordinateur du système informatique de la figure 1. Les dessins annexés pourront non seulement servir à compléter l'invention, mais aussi contribuer à sa définition, le cas échéant.

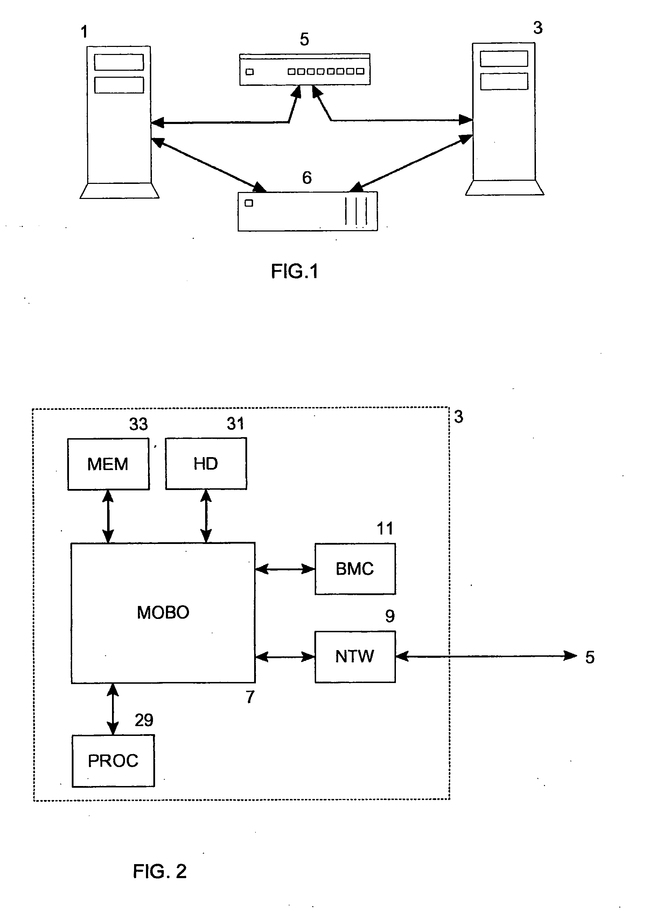

Le système informatique de la figure 1 comprend un premier ordinateur 1 et un second ordinateur 3, capables de communiquer entre eux en échangeant des signaux informatiques par l'intermédiaire d'une infrastructure réseau 5.

Ici, l'infrastructure réseau 5 est de type filaire, mais des infrastructures sans fil, à fibre optique ou autres peuvent être envisagées, y compris combinant différentes technologies adaptées à l'échange de signaux informatiques.

En particulier, le système de la figure 1 peut constituer tout ou partie d'une grappe d'ordinateurs, typiquement logée dans une même salle machine.

L'invention n'est cependant pas limitée à cet exemple, et l'étendue géographique du réseau reliant les premier 1 et second 3 ordinateurs peut être aussi bien locale, et couvrir par exemple un immeuble entier, que globale, les premier et second ordinateurs pouvant alors être distants l'un de l'autre de plusieurs kilomètres. Dans ce dernier cas, l'infrastructure de réseau 5 peut comprendre une partie du réseau mondial Internet.

En option, le premier ordinateur 1 et le second ordinateur 3 peuvent partager un espace de stockage, par exemple sous la forme d'une baie 6, mémorisant tout ou partie des applications et des données nécessaires à l'exploitation du premier ordinateur 1.

Tel que représenté sur la figure 2, le second ordinateur 3 comporte une carte mère 7, laquelle est reliée à un premier jeu de composants électroniques, formant une interface de communication 9 adaptée à l'infrastructure réseau 5.

Ici, l'interface de communication 9 est conforme au standard Ethernet, le jeu de composants pouvant être incorporé sur une carte dédiée ou directement sur la carte mère 7.

L'interface de communication 9 pourrait prendre d'autres formes, telles que, par exemple, un modem ADSL ou RTC, un module Bluetooth, ou d'autres standards encore.

La carte mère 7 du second ordinateur 3 est en outre reliée à un second jeu de composants électroniques formant un contrôleur de type BMC 11.

Un contrôleur de type BMC (pour "baseboard management controller", ou contrôleur de gestion de carte principale, en français) est capable de coopérer avec la carte mère à laquelle il est relié pour, en particulier, commander la mise sous tension de fonctionnement, ou démarrage ("POWER ON"), la réinitialisation ("RESET"), et la mise hors tension, ou arrêt ("POWER OFF") de l'ordinateur.

Le contrôleur BMC 11 comprend une ligne de transmission de signaux, ou bus, de type IPMB (pour "Intelligent Platform Management Bus"), par l'intermédiaire de laquelle le contrôleur BMC 15 peut recevoir des signaux de commande en provenance du réseau 5. Ici, ces signaux de commande sont de type IPMI (pour "Intelligent Platform Management Interface", ou interface de gestion intelligente de matériel, en français).

Le protocole IPMI comprend un ensemble de spécifications, qui, une fois implémentées, permettent la gestion à distance de caractéristiques matérielles d'un ordinateur, en particulier sa mise sous tension, son redémarrage et sa mise hors tension.

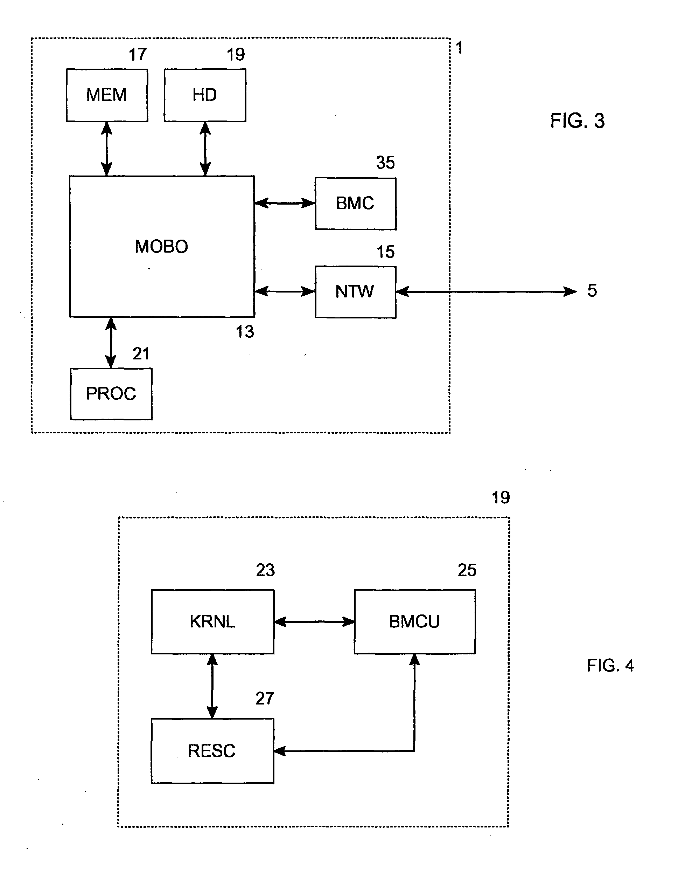

Sur la figure 3, le premier ordinateur 1 comporte une carte mère 13, reliée à un premier jeu de composants électroniques, formant une interface de communication 15 adaptée à l'infrastructure réseau 5.

Le premier ordinateur 1 comprend en outre un ou plusieurs modules de mémoire vive 17, un support de stockage de données 19, en particulier de type disque dur, et un ou plusieurs microprocesseurs 21 interagissant pour faire fonctionner un système d'exploitation 23 stocké dans le support 19 (figure 4).

Sur la figure 4, le support de stockage de données 19 comprend en outre un module de gestion BMC 25 (noté "BMCU") capable, lorsqu'il est exécuté, d'interagir avec le système d'exploitation pour envoyer des commandes de type IPMI à travers le réseau 7.

Ici, le système d'exploitation est conforme au standard Unix, en particulier du type Linux. Par exemple, ce peut être une distribution RedHat, par exemple RHEL4 ou RHEL5, laquelle intègre un ensemble de commandes IPMI, sous la forme d'un paquet ("package") appelé "IPMI-TOOLS". Dans ce mode de réalisation, le module de gestion BMC est réalisé très simplement sous la forme d'un module du noyau de système d'exploitation associé à des commandes utilisateurs.

Cependant, rien n'exclut que le module de gestion BMC 25 prenne une forme plus complexe, par exemple un logiciel spécifique, tel que fourni par le fabriquant du jeu de composants BMC 11.

Le support de stockage 19 du premier ordinateur 1 comprend en outre un dispositif de secours 27 agencé de manière à interagir avec le système d'exploitation 23 et le module de gestion BMC 25.

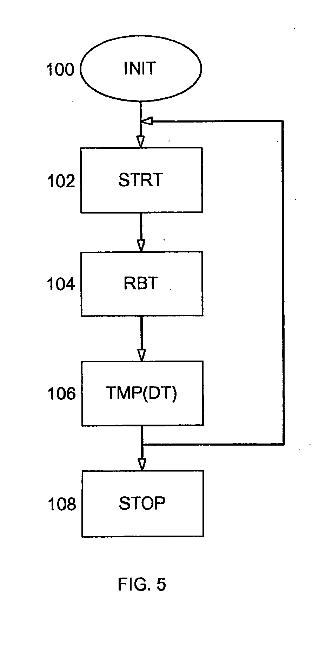

On fait référence à la figure 5.

Le module de secours 27 est agencé de manière à s'initialiser à une étape 100, puis à appeler une fonction STRT, à l'étape 102. La fonction STRT est agencée de manière à coopérer avec le module de gestion BMC 25 pour émettre un signal de commande de mise sous tension/démarrage à destination de l'interface BMC 11 du second ordinateur 3.

Ici, la fonction STRT est agencée de manière à exécuter la commande IPMI "POWER_ON" du paquet IPMI-TOOLS de la distribution REDHAT.

À l'étape 104, le dispositif de secours 27 est agencé de manière à appeler une fonction RBT. La fonction RBT est agencée de manière à coopérer avec le module de gestion BMC 25 pour émettre un signal de commande de redémarrage, ou de réinitialisation, à destination du second ordinateur 3.

Ici, la fonction RBT est agencée de manière à appeler la commande IPMI "RESET" du paquet IPMI-TOOLS de la distribution REDHAT.

À l'étape 106, optionnelle, le module de secours 27 est agencé de manière à appeler une fonction de temporisation TMP. La fonction TMP est agencée de manière à suspendre l'exécution du module de secours 27 pour une durée DT déterminée.

Puis, le module de secours est agencé de manière à recommencer à l'étape 102.

L'arrêt de l'exécution du dispositif de secours 27 peut intervenir, à une étape 108, sur une action particulière, typiquement une commande d'arrêt provenant d'un utilisateur.

Lorsque le dispositif de secours 27 est exécuté, l'interface BMC 11 reçoit régulièrement des commandes de réinitialisation de l'ordinateur 3. Telle que mise en oeuvre dans le dispositif de secours 27, l'étape de réinitialisation RBT 104, et le cas échéant l'étape de temporisation 106, exécutées en boucle forment un premier module, agencé de manière à émettre répétitivement un signal de commande de redémarrage pour le second ordinateur 3. L'étape 102 forme elle un second module agencé de manière à émettre un signal de commande de démarrage pour le second ordinateur 3.

Comme le montre la figure 2, l'ordinateur 3 comprend également un ou plusieurs processeurs 29, un support de stockage de données 31, par exemple de type disque dur, et une mémoire de travail 33, chacun de ces éléments interagissant avec la carte mère 7, en particulier pour exécuter un système d'exploitation (non représenté).

De préférence, le système d'exploitation de l'ordinateur 3 est analogue au système d'exploitation 23 du premier ordinateur 1. Cependant, cela ne présente aucun caractère obligatoire.

Comme l'exécution de l'étape 104 seule par le dispositif de secours 27 est très rapide, en comparaison du processus de démarrage complet du second ordinateur 3, ce dernier se trouve réinitialisé avant que son système d'exploitation ait pu être lancé.

Autrement dit, tant que le dispositif de secours 27 est en cours d'exécution, le second ordinateur 3 n'est pas en état de fonctionner dans le système informatique de l'invention.

En cas de défaillance de l'ordinateur 1 suffisamment importante pour empêcher l'exécution des applications de ce premier ordinateur 1, le dispositif de secours 27 ne peut plus être exécuté. Le processus d'initialisation du second ordinateur 3 peut être mené jusqu'à son terme, et l'ordinateur 3 est en état de fonctionner dans le système selon l'invention.

De préférence, le support de stockage 31 du second ordinateur 3 comprend au moins les applications du premier ordinateur 1, en sorte que le second ordinateur 3 peut remplacer le premier ordinateur 1 dans le système de l'invention lorsque celui-ci est défaillant.

Le second ordinateur 3 constitue ainsi un ordinateur de secours pour le premier ordinateur 1, ou ordinateur principal, et le système formé par ces ordinateurs peut être qualifié de "système à haute disponibilité". On remarquera que la mise en oeuvre de l'invention ne nécessite aucun dispositif matériel particulièrement dédié à la surveillance de systèmes informatiques, ce qui rend son coût de réalisation attractif.

Les systèmes d'exploitation des premier et second ordinateurs présentent avantageusement des configurations identiques. Ainsi, le reste de leur environnement informatique, en particulier les ordinateurs composant le reste du réseau ou du cluster est indifférent au fait de savoir lequel du premier et du second ordinateur est en fonctionnement. Les premier et second ordinateurs peuvent notamment être configurés de manière à présenter la même adresse IP, en sorte que le fonctionnement de l'environnement informatique n'est en aucune manière perturbé par le remplacement du premier ordinateur par le second. Et ceci peut être fait sans partage d'adresse IP.

Dans un mode de réalisation particulier, un certain nombre de ressources logicielles peuvent être stockées dans la baie 6, pour un accès commun par chacun des premier et second ordinateur. Ces ressources peuvent comprendre en particulier des données d'exploitation, des applications d'exploitation, un moteur de base de données ou des données de contenu pour une telle base. Une telle mise en commun des ressources rend encore plus aisée la configuration du système informatique selon l'invention.

Comme le premier ordinateur 1 et le second ordinateur 3 ne fonctionnent jamais de manière simultanée, la configuration du réseau ou du cluster s'en trouve grandement facilitée. En particulier, la baie de stockage 6 devient optionnelle, et, lorsqu'elle est utilisée, il n'est pas nécessaire d'y inclure une partie système d'exploitation, au contraire des solutions de l'état de la technique. Il est d'ailleurs possible de se contenter de stocker sur cette baie 6 les données d'une base, sans son moteur, ce qui est particulièrement simple à réaliser.

Avantageusement, le premier ordinateur 1 comprend lui aussi un second jeu de composants, formant une interface de type BMC 35, capable d'interagir avec la carte mère 13, et le support de stockage 31 du second ordinateur 3 comprend un dispositif de secours analogue au dispositif de secours 27 du premier ordinateur 1, agencé de manière à émettre de manière répétée une commande de réinitialisation à l'adresse du premier ordinateur 1, en sorte que ce premier ordinateur 1 peut, à son tour, fonctionner en temps qu'ordinateur de secours pour le second ordinateur 3.

En l'absence de l'étape de temporisation 104, l'émission de commandes de réinitialisation à destination de l'interface BMC 11 du second ordinateur 3 est répétée à un intervalle de temps qui est le plus faible autorisé par les performances de calcul de l'ordinateur 1.

Une répétition aussi rapide n'est pas nécessaire à l'invention : un temps de répétition inférieur au temps de démarrage du second ordinateur 3 est suffisant.

Autrement dit, l'intervalle de temps DT doit être sensiblement inférieur au temps de démarrage du second ordinateur 3 pour que ce dernier soit empêché de démarrer, sans qu'il soit nécessaire d'émettre en permanence une commande de réinitialisation.

De préférence, l'intervalle de temps DT est choisi de manière sensiblement inférieure au temps nécessaire au second ordinateur pour complètement exécuter son "BIOS" (de l'anglais Basic input/output system, ou système de base des entrées/sorties). Ainsi, le redémarrage du second ordinateur est effectué avant le tout début du lancement (amorce) du système d'exploitation et ne cause donc aucun dommage à ce dernier.

Pour ce faire, on peut chronométrer le temps de démarrage du second ordinateur, et en déduire la valeur de l'intervalle DT.

Par ailleurs, on peut augmenter le temps nécessaire au démarrage du second ordinateur 3, par exemple en demandant un test complet, ou des tests supplémentaires, de la mémoire 33 à la mise sous tension du second ordinateur 3. Ceci prolonge dans le temps l'exécution du BIOS et permet d'augmenter en conséquence l'intervalle DT. Ceci peut être réalisé en réglant les paramètres adéquats dans le système d'exploitation de la carte mère 7 ("BIOS").

Dans une réalisation avantageuse de l'invention, le système d'exploitation 23 est agencé de manière à provoquer l'exécution du dispositif de secours 27 dès l'achèvement du chargement de ce système d'exploitation 23, en sorte que le système informatique est protégé contre toute défaillance dès le chargement du système d'exploitation 23 du premier ordinateur 1.

La mise sous tension/démarrage du premier ordinateur 1 peut être provoqué en réponse à une commande en provenance du réseau, telle qu'une commande IPMI "POWER_ON", par exemple émise d'un troisième ordinateur connecté à l'infrastructure réseau 5, ou encore manuellement.

Dans le dispositif de secours 27, l'étape 102 de démarrage du second ordinateur 3 est optionnelle, ce démarrage pouvant être provoqué de manière différente, par exemple en réponse à une commande de démarrage transmise au travers de l'infrastructure réseau 5, telle qu'une commande IPMI "POWER_ON", ou manuellement.

Dans la mesure où une grappe d'ordinateurs peut comprendre un nombre important d'ordinateurs, il est en général souhaitable d'émettre un signal de commande de mise sous tension/démarrage à l'ensemble des ordinateurs de la grappe simultanément, et non de manière individuelle.

Autrement dit, lorsque les premier 1 et second 3 ordinateurs sont intégrés à une grappe, il se peut que ces ordinateurs 1 et 3 reçoivent un signal de commande de mise sous tension/démarrage simultanément, ou d'une manière si peu décalée dans le temps qu'il est impossible de prédire avec une statistique satisfaisante lequel de ces ordinateurs démarrera le premier.

Ceci peut ne pas être problématique. Dans le cas où les premier 1 et second 3 ordinateurs sont identiques en termes d'applications, c'est-à-dire qu'ils sont capables d'effectuer des tâches identiques dans le système avec des performances similaires, il peut être inutile de prévoir lequel du premier et du second ordinateur fonctionnera en tant qu'ordinateur principal. L'ordinateur principal sera l'ordinateur le plus rapide à démarrer et il bloquera dès lors le deuxième ordinateur. L'utilisation de la baie 6 pour mettre en commun le plus de composants logiciels possible est alors encore plus particulièrement profitable.

Dans d'autres cas, on peut préférer que le premier ordinateur 1, par exemple, et non le second ordinateur 3 fonctionne en tant qu'ordinateur principal. Pour ce faire, il suffit de raccourcir le temps de démarrage du premier ordinateur 1 par rapport à celui du second ordinateur 3, par exemple en supprimant tout ou partie des tests de sa mémoire 13 dans le "BIOS", et/ou en augmentant les tests de mémoire du second ordinateur.

Dans un mode de réalisation particulier, le dispositif de secours 27 prend la forme un script rassemblant des commandes du système d'exploitation ("shell"), chargé en tant que service ("DAEMON")

Dans des développements particuliers de l'invention, le premier ordinateur 1 peut comprendre en outre des outils logiciels ou matériels capables de diagnostiquer un dysfonctionnement de cet ordinateur. Dans ce cas, il est avantageux d'agencer ces outils de manière que l'arrêt du script soit commandé lorsqu'une panne, un fonctionnement anormal ou même une simple baisse des performances est diagnostiqué. Autrement dit, cela permet de procéder au remplacement du premier ordinateur 1 par le second ordinateur 3 dans des cas de dysfonctionnement qui, bien que gênants, ne sont pas suffisamment graves pour provoquer l'inexécution dudit script. Ceci présente l'avantage que l'ordinateur 1 peut alors être arrêté de manière habituelle, par exemple par une commande supplémentaire des outils de diagnostic, et éventuellement relancé. Ce simple redémarrage peut parfois suffire à résoudre certains des dysfonctionnements en question.

L'invention n'est pas limitée aux modes de réalisation décrits, uniquement à titre d'exemples, mais englobe toutes les variantes que pourra envisager l'homme de l'art.

En particulier, l'invention a été décrite avec un jeu de composants de type BMC. À ce jour, la Demanderesse juge cette technologie préférable, en particulier car les ordinateurs de type serveurs sont équipés de manière standard de cartes électroniques de type BMC. Ceci rend l'invention particulièrement simple à mettre en oeuvre, robuste et bon marché. Pour autant, il n'existe aucune limitation technique à l'utilisation d'une technologie différente mais fonctionnellement analogue, par exemple développée dans le futur.

Le système informatique a été décrit au moyen de deux ordinateurs seulement mais l'invention peut être appliquée à un système comprenant une pluralité d'ordinateurs.

Un troisième ordinateur, analogue aux premier et second ordinateurs, peut être prévu en tant qu'ordinateur de secours pour le second ordinateur, en sorte que même en cas de défaillance grave du premier ordinateur 1 et du second ordinateur 3, le système conserve sa haute disponibilité.

Dans le cas où l'infrastructure réseau 5 comprend des moyens de communication de rapidité réduite, il peut être bon d'augmenter les temps de démarrage comme exposé plus haut.

Les premier et second ordinateurs fonctionnent ici sous Linux, mais d'autres systèmes d'exploitation peuvent être envisagés, pour autant qu'ils offrent des possibilités comparables pour la réalisation du dispositif de secours 27.

L'invention peut être également vue comme un procédé d'interaction entre au moins un premier et un second ordinateur.

Le dispositif de secours 27 peut prendre la forme d'un produit de programme d'ordinateur spécifique, le cas échéant incluant tout ou partie du module de gestion BMC 25.

## Revendications

1. Système informatique, du type comprenant au moins un premier (1) et un second (3) ordinateur, reliés entre eux par des moyens de communications (5;9;15), le second ordinateur (3) comprenant des moyens de redémarrage (11), pouvant être actionnés en réponse à un signal de commande transmis grâce auxdits moyens de communication (5;9;11), **caractérisé en ce que** le premier ordinateur (1) comprend un dispositif de secours (27), comprenant au moins un premier module, agencé de manière à émettre répétitivement un signal de commande de redémarrage pour le second ordinateur (3).

2. Système informatique selon la revendication 1, dans lequel le second ordinateur (3) comprend en outre des moyens de démarrage (11), pouvant être actionnés en réponse à un signal de commande transmis grâce auxdits moyens de communications (5;9;11), et en ce que le dispositif de secours (27) comprend en outre un second module agencé de manière à émettre un signal de commande de démarrage pour le second ordinateur (3) consécutivement au démarrage du premier ordinateur (1).

3. Système informatique selon la revendication 2, dans lequel le dispositif de secours (27) est agencé de manière à faire exécuter le premier module à la suite de l'exécution du second module.

4. Système informatique selon l'une des revendications précédentes, dans lequel le premier ordinateur (1) comprend des moyens de redémarrage (25), pouvant être actionnés en réponse à un signal de commande transmis grâce auxdits moyens de communication (5;9;11), et en ce que le second ordinateur (3) comprend un dispositif de secours (27), comprenant un premier module agencé de manière à émettre répétitivement un signal de commande de redémarrage pour le premier ordinateur (1).

5. Système informatique selon la revendication 4,
**caractérisé en ce que** le premier ordinateur (1) comprend en outre des moyens de démarrage (25), pouvant être actionnés en réponse à un signal de commande transmis grâce auxdits moyens de communications (5;9;11), et **en ce que** le dispositif de secours du second ordinateur (3) comprend en outre un second module agencé de manière à émettre un signal de commande de démarrage pour le premier ordinateur (1) consécutivement au démarrage du second ordinateur (3).

6. Système informatique selon l'une des revendications précédentes, dans lequel le premier module est agencé de manière à émettre le signal de commande de redémarrage pour le second ordinateur (3) à un temps de répétition choisi inférieur au temps de démarrage de ce second ordinateur (3).

7. Système informatique selon l'une des revendications précédentes, dans lequel le second ordinateur (3) est réglé de manière à présenter un temps de démarrage supérieur à un temps de répétition moyen du signal de commande de redémarrage.

8. Système informatique selon l'une des revendications précédentes, dans lequel le second ordinateur (3) est réglé de manière à présenter un temps de démarrage supérieur au temps de démarrage moyen du premier ordinateur (1).

9. Procédé d'interaction entre au moins un premier (1) et un second (3) ordinateur, le procédé comprenant les étapes suivantes :
a) faire démarrer le premier ordinateur,
b) faire émettre répétitivement par le premier ordinateur (1) des signaux de commande de redémarrage pour le second ordinateur (2)
c) faire redémarrer le second ordinateur en réponse à chacun des signaux de commande de redémarrage.

10. Procédé selon la revendication 9, comprenant en outre les étapes suivantes :
d) faire émettre au premier ordinateur (1) un signal de commande de démarrage pour le second ordinateur (3) consécutivement à l'étape a) et préalablement à l'étape b).

11. Procédé selon l'une des revendications 9 et 10, le second ordinateur ayant démarré, comprenant en outre les étapes suivantes :
e) faire émettre répétitivement au second ordinateur (3) un signal de commande de redémarrage pour le premier ordinateur (1), et
f) faire redémarrer le premier ordinateur (1) en réponse à chaque signal de commande de redémarrage.

12. Procédé selon la revendication 11, comprenant en outre les étapes suivantes :
g) faire émettre au second ordinateur (3) un signal de commande de démarrage pour le premier ordinateur (1) préalablement à l'étape e), et
h) faire démarrer le premier ordinateur (1) en réponse au signal de commande de démarrage.
